# EUROPEAN PATENT APPLICATION

(11) **EP 3 179 726 A1**
(43) Date of publication of application: **14.06.2017**
(21) Application number: 15802345.7
(22) Date of filing: 20.03.2015
(51) Int. Cl.: H04N 21/231

(54) **QUERY PROCESSING METHOD AND DEVICE FOR PROGRAM CONTENTS**

(30) Priority: 06.08.2014 CN 201410385654
(71) Applicant: ZTE Corporation, Shenzhen, Guangdong 518057 (CN)
(72) Inventor: HU, Feng, Shenzhen Guangdong 518057 (CN)
(74) Representative: Winter, Brandl, Fürniss, Hübner, Röss, Kaiser, Polte - Partnerschaft mbB
(86) International application number: PCT/CN2015/074791
(87) International publication number: WO 2015/184898

(57) **Abstract**

The present invention provides a query processing method and device for program contents, wherein the method comprises: a content server is provided between a Electronic Program Guide (EPG) system and a service database, the content server receives a query message from the EPG system (S102), the content server acquires the program contents corresponding to the query message (S104), and the content server feeds the acquired program contents back to the EPG system (S106). The present invention solves the problem in the related art, the problem occurring when programs are shown to the terminal by the EPG system, achieves that the short-time high pulse would no longer appears in an input/output port (I/O port) in EPG, and reduces the operation for the whole system, thereby the efficiency of the system is improved and the service can be stably provided.

## Description

### TECHNICAL FIELD

The present application relates to the field of communications, and in particular, to a method and a device for processing a query for program content.

### BACKGROUND

An Electronic Program Guide (EPG) system is the source of various program data shown on a terminal user equipment. EPG may be regarded as a architecture of a WEB server plus a database, where information such as templates, users, programs, titles, rights and the like is stored on the EPG background database, and the related information is presented to the terminal user equipment via a WEB server. The main program information stored on the EPG is Video on Demand (VOD), which occupies up to 99% of the data, and the rest are data such as titles and the like. On a commercial point, intact program information will be stored on each EPG, which may reach an order of magnitude of 2 million, as well as the program information of hundreds of thousands of other direct-broadcast channels. The number of programs gradually increases over time, and the following related problems exist in the current EPG system:

First: Unstable Central Processing Unit Input/Output Value. The value tends to leap high, and affects the performance of the system. The EPG will periodically perform a series of data synchronization operations such as VOD, direct-broadcast channel program data update, user data update, heat degree data update, etc., and with the gradual accumulation of data volume, the operating system CPU I/O value will rise in a short time, which causes decrease of the system performance in a short time, the weakened service ability, and the decreased content querying efficiency of the terminal user.

Second: Poor Extendibility. On the current architecture, a single EPG stores all the program data, so that after the data volume gradually increases to the maximum storage capacity of the current hardware and the maximum processing ability of the software, systems scalability cannot be realized simply by adding hardware or optimizing the software processing procedure, rather, the existing hardware must be replaced.

Third: Poor Reliability. The current EPG system employs a single-database architecture, and in this case, if the data file of the database of the EPG is destroyed, the current EPG will be unable to continue providing a service, and the user service can only be restored by closing down and reconstructing the database.

Fourth: Lack of Service-Oriented Mechanism. Under the current architecture, all EPGs must perform independent data operation, for example, data query, query result buffer and update, so that sharing among high-heat degree and high-use frequency resources cannot be realized. As a result, the operation efficiency cannot be further improved.

By now, there is no effective solutions for the above problems in the existing art when an EPG system shows a program to a terminal.

### SUMMARY

Embodiments of the invention provide a method and a device for processing a query for program content, thereby at least solving the problems of the existing art present when an EPG system shows a program to a terminal.

According to one embodiment of the invention, there provides a method for processing a query for program content, which is implemented by arranging a content server between an EPG system and a service database, wherein, the method includes: receiving, by the content server, a query message from the EPG system; acquiring, by the content server, a program content corresponding to the query message; and feeding, by the acquired content server, the program content back to the EPG system.

The acquiring, by the content server, a program content corresponding to the query message includes at least one of: acquiring, by the content server, the program content locally; and acquiring, by the content server, the program content from the service database.

Before acquiring, by the content server, the program content locally, the method includes: acquiring and storing, by the content server periodically, a program content from the service database.

Before receiving, by the content server, a query message from the EPG system, the method includes: receiving, by the EPG system, a query request from a terminal; and sending, by the EPG system, the query message to the content server under the determination that the query request is a request for querying a program content.

Before sending, by the EPG system, the query message to the content server, the method further includes: determining, by the EPG system, that the program content is not stored locally.

The method further includes: acquiring, by the EPG system, the content corresponding to the query request from the service database, when the EPG system determines that the query request is not a request for querying a program content.

According to one embodiment of the invention, it further provides another method for processing a query for program content, which is implemented by arranging a content server between an EPG system and a service database, wherein, the method includes: sending, by the EPG system, a query message to the content server; and receiving, by the EPG system, the program content fed back by the content server according to the query message, wherein, the program content corresponds to the query message.

The content server acquires the program content in at least one of the modes below: acquiring, by the content server, the program content locally; and acquiring, by the content server, the program content from the service database.

Before sending, by the EPG system, a query message to the content server, the method includes: receiving, by the EPG system, a query request from a terminal; and sending, by the EPG system, the query message to the content server under the determination that the query request is a request for querying a program content.

Before sending the query message to the content server, the method further includes: determining, by the EPG system, that the program content is not stored locally.

According to another embodiment of the invention, it further provides a device for processing a query for program content, including: a receiving module, which is located on a content server between an EPG system and a service database, arranged for receiving a query message from the EPG system; an acquiring module, which is located on a content server between an EPG system and a service database, arranged for acquiring a program content corresponding to the query message; and a feedback module, which is located on a content server between an EPG system and a service database, arranged for feeding the acquired program content back to the EPG system.

The acquiring module includes: a first acquiring unit, arranged for acquiring the program content locally; and/or a second acquiring unit, arranged for acquiring the program content from the service database.

According to another embodiment of the invention, it further provides another device for processing a query for program content, which is applied to an EPG system, including: a sending module, arranged for sending a query message to a content server, wherein, the content server is arranged between the EPG system and a service database; and a first receiving module, arranged for receiving the program content fed back by the content server based on the query message, wherein, the program content corresponds to the query message.

The device further includes: a second receiving module, arranged for receiving a query request from a terminal; and a determining module, arranged for sending the query message to the content server under the determination that the query request is a request for querying a program content.

In the embodiments of the invention, a content server is arranged between an EPG system and a service database, and the content server receives a query message from the EPG system, acquires the program content corresponding to the query message, and feeds the acquired program content back to the EPG system. Therefore, the problems of the existing art present when an EPG system shows a program to a terminal may be solved, there is no short-time I/O leaping of the EPG any more, and the overall operation of the system is reduced, so that the system efficiency may be improved, and the service may be provided stably.

### BRIEF DESCRIPTION OF THE DRAWINGS

The drawings illustrated here, which form a part of the application, are used for providing further understanding of the invention. Illustrative embodiments of the invention and the illustrations thereof are used for explaining the invention, rather than inappropriately limiting the invention. In the drawings:
Fig. 1 is a flow chart of a method for processing a query for program content according to one embodiment of the invention;
Fig. 2 is flow chart 1 of a method for processing a query for program content according to one embodiment of the invention;
Fig. 3 is a structure diagram of a device for processing a query for program content according to one embodiment of the invention;
Fig. 4 is structure diagram 1 of a device for processing a query for program content according to one embodiment of the invention;
Fig. 5 is structure diagram 2 of a device for processing a query for program content according to one embodiment of the invention;
Fig. 6 is structure diagram 3 of a device for processing a query for program content according to one embodiment of the invention;
Fig. 7 is a schematic diagram of a query request for a content based on the current EPG architecture;
Fig. 8 is a schematic diagram showing the query for a program content according to one embodiment of the invention;
Fig. 9 is a flow chart showing the processing of a query request for a program content according to one embodiment of the invention; and
Fig. 10 shows a systematic architecture of a content server according to one embodiment of the invention.

### DETAILED DESCRIPTION

The invention will be illustrated in detail in conjunction with the drawings and embodiments. It further needs to be noted that, in the case of no conflict, the embodiments of the application and the characteristics in the embodiments may be combined with each other.

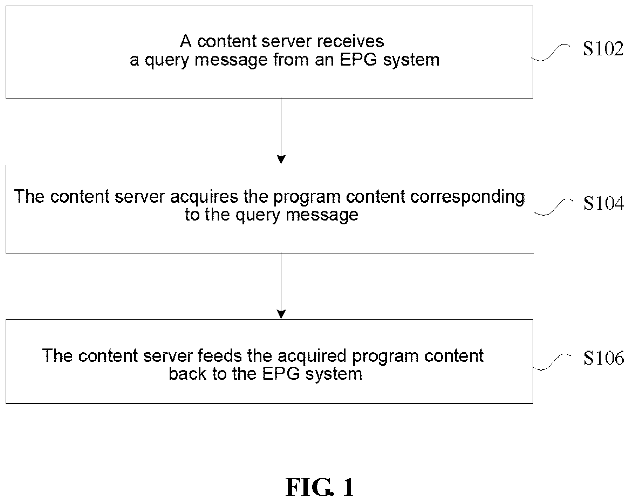

This embodiment provides a method for processing a query for program content, and Fig. 1 is a flow chart of the method for processing a query for program content according to this embodiment of the invention. As shown in Fig. 1, the process includes the steps below:
Step S102: A content server receives a query message from an EPG system;
Step S104: The content server acquires the program content corresponding to the query message; and
Step S106: The content server feeds the acquired program content back to the EPG system.

By the above steps, a content server is arranged between the EPG system and the service database, and the content server receives a query message from the EPG system, acquires the program content corresponding to the query message, and feeds the acquired program content back to the EPG system. All big data such as program contents, etc., are stored on the content server, and the program content to be queried is provided by the content server; so that compared with the configuration in the existing art that the EPG system functions as the sources of various program data shown to a terminal user equipment, there is no short-time I/O leaping of the EPG system according to the present invention, and the overall operation of the system is reduced, so that the system efficiency may be improved, and the service may be provided stably.

The above Step S104 relates to the acquiring of the program content corresponding to the query message by the content server, and it is noted that, the content server may acquire the program content corresponding to the query message in various ways, which will be illustrated below. In one preferred embodiment, the content server may acquire the corresponding program content locally; in another preferred embodiment, the content server may acquire the corresponding program content from a service database; and in yet another preferred embodiment, the content server may acquire the corresponding program content both locally and from a service database. As a result, the EPG will no longer perform the data storage, query and calculation functions, and hence the EPG can devote its function on providing a service to a terminal user equipment.

In one preferred embodiment, before the content server acquires the corresponding program content locally, it periodically acquires a program content from a service database and stores the program content, so that the content server may be updated synchronously with the update of the program contents in the service database.

In another preferred embodiment, when the EPG system receives a query request from a terminal, it first judges whether the query request is a request for querying a program content. If the query request is not a request for querying a program content, the EPG directly acquires the content to be queried from the service database and sends it to a terminal according to the existing art. When the EPG system judges that the query request is a request for querying a program content, it sends the query message to the content server, and the content server accomplishes the query task.

In another preferred embodiment, before the EPG system sends a query message to the content server, the EPG system determines whether the program content is stored locally or not. If it is judged that the program content to be queried is stored on the EPG system locally, the EPG system directly provides the queried program content to the terminal.

In another preferred embodiment, when the EPG system determines that the query request is not a request for querying a program content, the EPG system acquires the content corresponding to the query request from the service database, rather than acquiring the content corresponding to the query request via the content server.

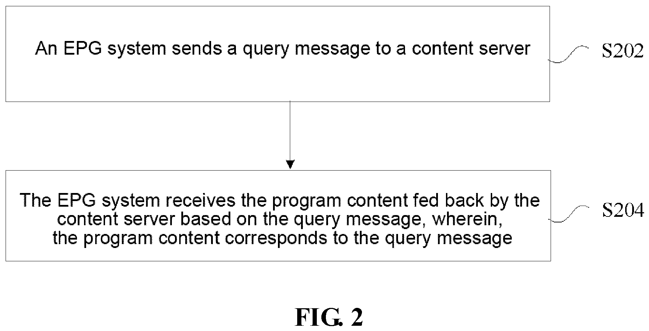

One embodiment of the invention provides another method for processing a query for program content, and Fig. 2 is flow chart 1 of the method for processing a query for program content according to the embodiment of the invention. As shown in Fig. 2, the process includes the steps below:
Step S202: An EPG system sends a query message to a content server; and
Step S204: The EPG system receives the program content fed back by the content server according to the query message, wherein, the program content corresponds to the query message.

By the above steps, a content server is arranged between the EPG system and the service database, and an EPG system sends a query message to the content server and receives the program content fed back by the content server according to the query message. compared with the configuration in the existing art that the EPG system functions as the sources of various program data shown to terminal user equipment, the EPG system in the present invention will no longer perform the data storage, query and calculation functions, and hence the EPG can devote its function on providing a service to a terminal user equipment. Therefore, there is no short-time I/O leaping of the EPG system, and the overall operation of the system is reduced, so that the system efficiency may be improved, and the service may be provided stably.

The above Step S204 relates to the acquiring of the program content corresponding to the query message by the content server, and it is noted that, the content server may acquire the program content corresponding to the query message in various ways, which will be illustrated below. In one preferred embodiment, the content server may acquire the corresponding program content locally; in another preferred embodiment, the content server may acquire the corresponding program content from a service database; and in yet another preferred embodiment, the content server may acquire the corresponding program content both locally and from a service database. As a result, the EPG will no longer perform the data storage, query and calculation functions, and hence the EPG can be concentrated on the function of providing a service to a terminal user equipment.

In another preferred embodiment, before the EPG system sends a query message to the content server, the EPG system determines whether the program content is stored locally. If it is judged that the program content to be queried is stored on the EPG system locally, the EPG system will not send a query message to the content server, rather, the EPG system directly provides the program content queried to the terminal.

In another preferred embodiment, when the EPG system determines that the query request is not a request for querying a program content, the EPG system acquires the content corresponding to the query request from the service database, rather than acquiring the content corresponding to the query request via the content server.

One embodiment of the invention further provides a device for processing a query for program content, and the device is arranged for implementing the above embodiments and preferred implementation modes, wherein the embodiments and preferred implementation modes that have been illustrated will not be described again. As used below, the term "module" may be a combination of software and/or hardware that can realize a preset function. Although the device described in the embodiment below is preferably implemented by software, the implementation by hardware or a combination of software and hardware is also conceivable.

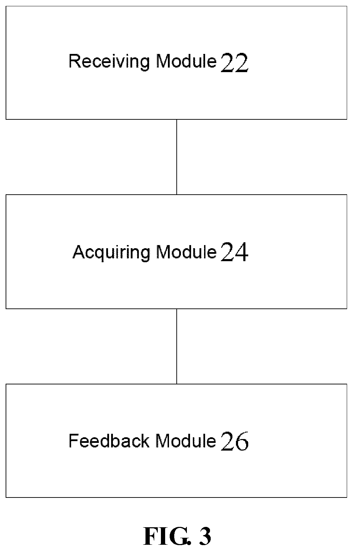

Fig. 3 is a structure diagram of a device for processing a query for program content according to one embodiment of the invention. As shown in Fig. 3, the device includes: a receiving module 22, which is located on a content server between an EPG system and a service database, arranged for receiving a query message from the EPG system; an acquiring module 24, which is located on a content server between an EPG system and a service database, arranged for acquiring the program content corresponding to the query message; a feedback module 26, which is located on a content server between an EPG system and a service database, arranged for feeding the acquired program content back to the EPG system.

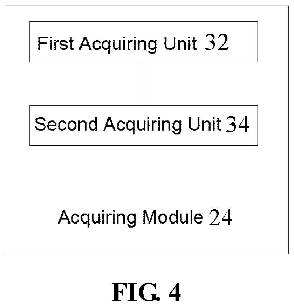

Fig. 4 is structure diagram 1 of a device for processing a query for program content according to one embodiment of the invention. As shown in Fig. 4, the acquiring module 24 includes: a first acquiring unit 32, arranged for acquiring the program content locally; and/or a second acquiring unit 34, arranged for acquiring the program content from a service database.

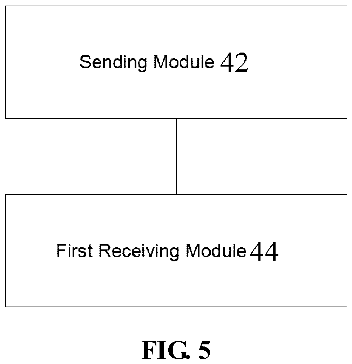

Fig. 5 is structure diagram 2 of a device for processing a query for program content according to one embodiment of the invention. As shown in Fig. 5, the device is applied to an EPG system, and the device includes: a sending module 42, arranged for sending a query message to a content server, wherein, the content server is arranged between the EPG system and a service database; and a first receiving module 44, which is arranged for receiving the program content fed back by the content server based on the query message, wherein, the program content corresponds to the query message.

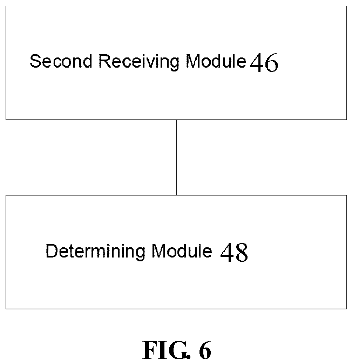

Fig. 6 is structure diagram 3 of a device for processing a query for program content according to one embodiment of the invention. As shown in Fig. 6, the device further includes: a second receiving module 46, arranged for receiving a query request from a terminal; and a determining module 48, arranged for sending the query message to the content server under the determiantion that the query request is a request for querying a program content.

As directed to the problems of the existing art, preferred embodiments will be illustrated in detail below in conjunction with the drawings.

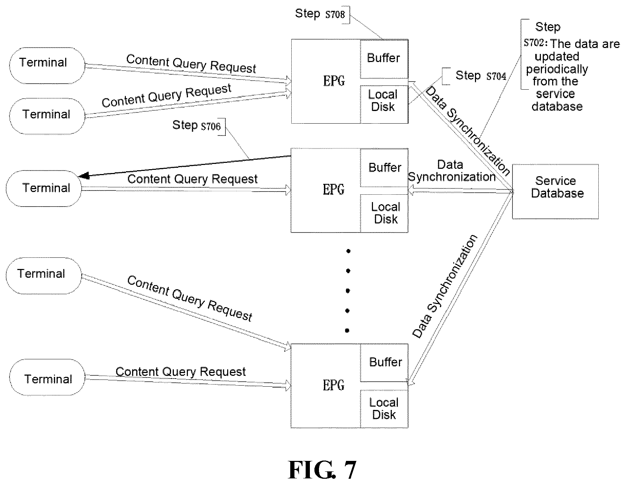

Fig. 7 is a schematic diagram of a content query request based on the existing EPG architecture. As shown in Fig. 7, the schematic diagram includes the steps below:
Step S702: Each EPG acquires the program data from a service database periodically in an incremental mode or a full amount mode;
Step S704: The data are stored into a local disk file;
Step S706: A query result is calculated and generated according to a content query request of a terminal user, and returned to the user; and
Step S708: The result is buffered in an EPG memory, and the memory data are updated periodically.

In conclusion, the EPG needs to provide an HTTP service to a user and is responsible for acquiring and updating the local disk data from the service database periodically, and also, it needs to perform the sequencing calculation of data and the query service of the content and is responsible for the periodic update of the memory data. Each EPG needs to repeat the above tasks periodically, so that the calculation, query and service efficiency of the whole system will be lowered significantly.

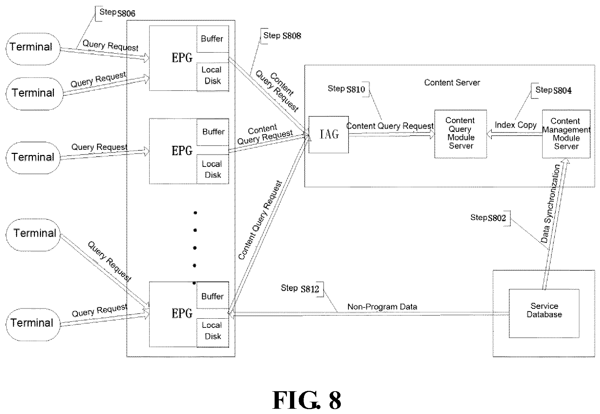

Fig. 8 is a schematic diagram showing a query of a program content according to one embodiment of the invention. As shown in Fig. 8, a content server cluster module is newly added to the system, wherein, the content server cluster module includes an Internet Access Gateway (IAG), a content query module and a content management module, and the schematic diagram includes the steps below:
Step S802: The content server realizes the separation of read and write, and the content management module is responsible for synchronizing the program data with the service database periodically, storing the data and establishing a content index;
Step S804: The index is copied to a content query server, and the index information is updated periodically, so that the impact of data synchronization and calculation on the query performance may be reduced;
Step S806: A terminal user initiates a content query request, the EPG queries the buffer, and if no query is hit, it turns to Step S808;
Step S808: The EPG initiates a content query request to the content server;
Step S810: The IAG enables load balancing of content query request on the content query server, and the content query module queries the local content; and
Step S812: The EPG only acquires a part of the non-program data from the service database periodically.

In conclusion, the EPG no longer performs incremental or full amount synchronization of the program data with the service database, and the related contents are no longer stored on the local disk, so that the EPG is no longer responsible for the tasks such as the sequencing calculation of program data, etc., and it may devote its function on providing a service to a terminal user. The IAG realizes the load balancing of the content query request and shares the responsibility on the content query request, and thus smooth expansion of the system may be realized, and an ability of super large-scale data query may be attained.

In order to realize a fast response to a content query request, it is analysed by the EPG, after a terminal initiates a query request, whether it is a program content query request according to the SQL statement to be queried, and the EPG determines whether it needs to process the content query request on the content server according to the Table Name to be queried in the statement; if it is a content query request, a query message is sent to the content server; if it is not a content query message, the query process of the existing solution is adopted. Because very few non-content type data are saved on the EPG, the query of a part of other data may be performed under the condition that the EPG performance is not affected.

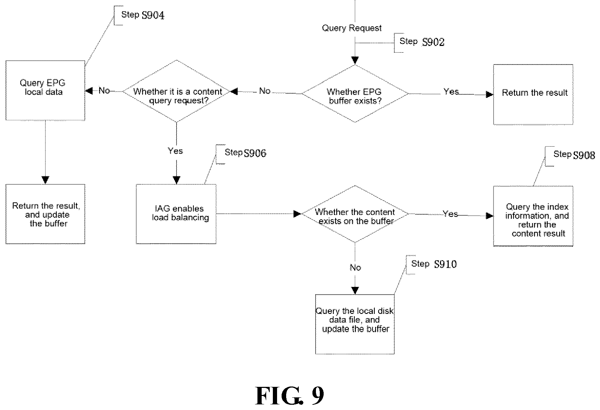

Fig. 9 is a flow chart showing the processing of a program content query request according to one embodiment of the invention. As shown in Fig. 9, the flow chart includes the steps below:
Step 902: A terminal user equipment initiates a query request to an EPG, and the EPG first queries to a local buffer whether it exists; if it exists, a result is returned;
Step 904: If it is queried that it does not exist, the EPG determines whether it is a content-related request according to the Table Name of the SQL; if it is not a content request, the EPG local data file is queried according to the existing solution, and then the EPG buffer is updated;
Step 906: If it is a content query request, the EPG converts it, via an SQL syntax, into a statement which can be fast queried by the content server, and sends the content query request message to the content server, and after the CIAG receive the content query request message, it enables load balancing of the message onto one of the content query module servers;
Step 908: The content query module server queries, according to an index, whether index information exists on the buffer; if a result is hit, a data result is returned, and the buffer of the content query module is updated;
Step 910: If the data to be queried does not exist in the buffer, the content data to be queried is acquired by querying the local data file, and the buffer is updated.

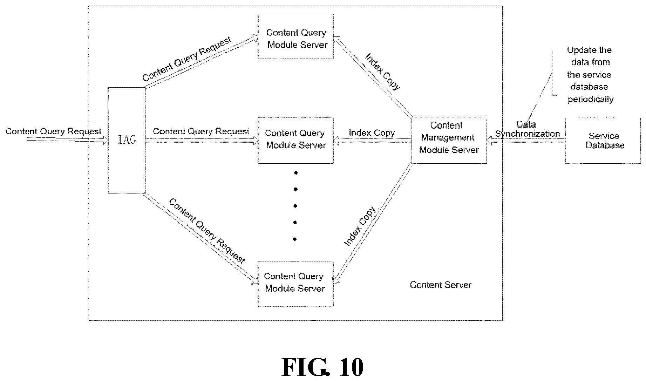

Fig. 10 shows a systematic architecture of a content server according to one embodiment of the invention. As shown in Fig. 10, the systematic architecture of the content server will be illustrated in detail below.

As the main processing part of a content query message, the content server cluster may provide 99% of the content query service in an IPTV system and provide a reliable, expandable, 10 million data level and service-oriented ability. It is found by the statistics performed on a large data volume according to the data query statements that are not hit on the commercial points that, most of the statements are queried according to the primary keys, and in the whole buffer data, the statements that are queried according to the direct primary keys reach about 92%. Index data will be established according to this data model, and the content server will be divided into content data query module, content data management module and IAG module according to a principle of stability and efficiency first.

IAG module: It is responsible for receiving a content query request message and enables the load balancing thereof onto a content query module server, thereby ensuring the stability of content query.

Content data management module: It is mainly responsible for synchronizing the service data with the service database periodically, storing the data in the local disk and synchronizing the data to the service query module, and for the optimization of the query efficiency, the content management module mainly establishes an index for a large volume of content data, which is also the main data operation of the whole system; however, it is not responsible for providing a service to an EPG. Moreover, it updates the index to the content query module periodically.

Content Data Query Module: It is consisted of several servers, and it may be expanded smoothly according to the data scale, without the need of a terminal service; it is mainly responsible for maintaining the incremental update of the index, providing a data query service to an EPG, providing a data buffer function and storing the actual content data.

In the preferred embodiments of the invention, the basic architecture is as follows: by using a centralized content server cluster, a service-oriented application is established, and uniform functions such as data storage, calculation, query, buffer and the like, for example, VOD, etc., are provided, and reliability and expandability are improved in a service cluster mode. By the centralization of the data query service, the EPGs no longer perform the data storage, query and calculation functions, and hence the EPGs can be concentrated on the function of providing a service to a terminal user equipment, so that there is no I/O short-time leaping of the EPGs any more, and the service may be provided stably. All big data such as VOD, etc., are stored on the content server cluster, and the content server provides data storage and data calculation and provides a query service and buffer, and the content server provides an HTTP service to all the EPGs and buffers the content query results, so that the query results may be shared as much as possible, and the overall operation of the system may be reduced, thereby the system efficiency may be improved. For the content query request of a terminal user, the EPG first queries whether the content exists on the local buffer, if the content does not exist, it sends a query message to the content server cluster, the content server cluster loads the query message to a certain content server, and the content server performs buffer query, if a result is hit, a message is returned and the result is buffered; if no result is hit, content query is performed on the local database, and a result is generated and buffered. The content server provides an expandable, high-performance and stable data query exhibition function, which can meet the query of the performance of 10 million data volume level. Stability is realized, and the CPU and IO values of the EPG are lowered, so that the EPG resources can be stably applied to terminal user services. System extendibility and stability are provided, and content query efficiency is improved, so that it may support 10 million-level content data query, and the current system may be expanded by simply adding a hardware server, the data query function may be shared, an application service-oriented mechanism may be established, and the system reliability may be improved.

Apparently, it should be understood by one skilled in the art that, each of the above modules or steps of the invention may be implemented by a general-purpose computing device, and they may be centralized on a single computing device or may be distributed on a network consisted of a plurality of computing devices. Optionally, they may be implemented by computing device-executable program codes, so that they may be stored in a storage device and executed by a computing device; moreover, in certain cases, the steps shown or described may be performed in an order different from that shown herein, or they may be respectively made into each integrated circuit module; or, it may be implemented by making a plurality of modules or steps thereof into a single integrated circuit module. Thus, the invention will not be limited to any specific combination of hardware and software.

The above description only shows some preferred embodiments of the invention, rather than limiting the invention. For one skilled in the art, the invention may have various modifications and variations. All modifications, equivalent substitutions and improvements, etc., made within the spirit and principles of the invention will pertain to the protection scope of the invention.

### INDUSTRIAL APPLICABILITY

As described above, the embodiments of the invention provide a method and a device for processing a query for program content, which have the following beneficial effects: the problems of the existing art present when an EPG system shows a program to a terminal may be solved, there is no short-time I/O leaping of the EPG any more, and the overall operation of the system is reduced, so that the system efficiency may be improved, and the service may be provided stably.

## Claims

1. A method for processing a query for program content, which is implemented by arranging a content server between an Electronic Programm Guide (EPG) system and a service database, the method comprising:
receiving, by the content server, a query message from the EPG system;
acquiring, by the content server, a program content corresponding to the query message; and
feeding, by the content server, the acquired program content back to the EPG system.

2. The method according to claim 1, wherein the acquiring by the content server a program content corresponding to the query message comprises at least one of:
acquiring, by the content server, the program content locally; and
acquiring, by the content server, the program content from the service database.

3. The method according to claim 1, wherein before acquiring by the content server the program content locally, the method comprises:
acquiring and storing, by the content server periodically, the program content from the service database.

4. The method according to claim 1, wherein, before receiving by the content server the query message from the EPG system, the method comprises:
receiving, by the EPG system, a query request from a terminal; and
sending, by the EPG system, the query message to the content server under the determination that the query request is a request for querying a program content.

5. The method according to claim 4, wherein before sending by the EPG system the query message to the content server, the method further comprises:
determining, by the EPG system, that the program content is not stored locally.

6. The method according to claim 4, further comprising:
acquiring, by the EPG system, a content corresponding to the query request from the service database, when the EPG system determines that the query request is not a request for querying a program content.

7. A method for processing a query for program content, which is implemented by arranging a content server between an Electronic Programm Guide (EPG) system and a service database, the method comprises:
sending, by the EPG system, a query message to the content server; and
receiving, by the EPG system, the program content fed back by the content server based on the query message, wherein the program content corresponds to the query message.

8. The method according to claim 7, wherein the content server acquires the program content in at least one of the modes below:
acquiring, by the content server, the program content locally; and
acquiring, by the content server, the program content from the service database.

9. The method according to claim 7, wherein, before sending by the EPG system a query message to the content server, the method comprises:
receiving, by the EPG system, a query request from a terminal; and
sending, by the EPG system, the query message to the content server under the determination that the query request is a request for querying a program content.

10. The method according to claim 9, wherein, before sending the query message to the content server, the method further comprises:
determining, by the EPG system, that the program content is not stored locally.

11. A device for processing a query for program content, comprising:
a receiving module, which is located on a content server between an Electronic Program Guide (EPG) system and a service database, arranged for receiving a query message from the EPG system;
an acquiring module, which is located on a content server between an EPG system and a service database, arranged for acquiring a program content corresponding to the query message; and
a feedback module, which is located on a content server between an EPG system and a service database, arranged for feeding the acquired program content back to the EPG system.

12. The device according to claim 11, wherein the acquiring module comprises:
a first acquiring unit, arranged for acquiring the program content locally; and/or
a second acquiring unit, arranged for acquiring the program content from the service database.

13. A device for processing a query for program content, which is applied to Electronic Program Guide (EPG) EPG system, comprising:
a sending module, arranged for sending a query message to a content server, wherein the content server is arranged between the EPG system and a service database; and
a first receiving module, arranged for receiving the program content fed back by the content server based on the query message, wherein the program content corresponds to the query message.

14. The device according to claim 13, further comprising:
a second receiving module, arranged for receiving a query request from a terminal; and
a determining module, arranged for sending the query message to the content server under the determination that the query request is a request for querying a program content.
